# EUROPEAN PATENT APPLICATION

(11) **EP 2 199 967 A1**
(43) Date of publication of application: **23.06.2010**
(21) Application number: 09178218.5
(22) Date of filing: 07.12.2009
(51) Int. Cl.: G06Q 30/00

(54) **Apparatus for providing digital contents using dmb channel and method thereof**

(30) Priority: 08.12.2008 KR 20080124122; 14.04.2009 KR 20090032456
(71) Applicant: Electronics and Telecommunications Research Institute, Daejeon-city 305-350 (KR)
(72) Inventor: Ma, Jinsuk, 305-313, Daejeon-city (KR); Kim, Sunja, 305-755, Daejeon-city (KR); Ham, Hosang, 305-755, Daejeon-city (KR); Kim, Chaekyu, 305-707, Daejeon-city (KR)
(74) Representative: Schöniger, Franz-Josef

(57) **Abstract**

The present invention relates to an apparatus for providing digital contents using a DMB channel. The apparatus for providing digital contents includes: a content storage unit that stores content files; an advertisement information generator that generates advertisement information on the content files stored in the content storage unit; and a DMB transmitter and receiver that broadcasts the generated advertisement information to DMB terminals within a predetermined radius using the Dfv1B channel. With the present invention, the user using the apparatus for providing digital contents can obtain various information on the contents through the DMB channel and when there are the desired contents, moves to adjacent apparatuses for providing digital contents to be able to receive various contents.

## Description

### RELATED APPLICATIONS

The present application claims priority to Korean Patent Application Serial Number 10-2008-0124122, filed on Dec. 8, 2008 and Korean Patent Application Serial Number 10-2009-0032456, filed on Apr. 14, 2009, the entirety of which are hereby incorporated by reference.

### BACKGROUND OF THE INVENTION

### 1. Field of the Invention

The present invention relates to an apparatus for providing digital contents and a method thereof. More specifically, the present invention relates to an apparatus for providing digital contents using a DMB channel and a method thereof.

### 2. Description of the Related Art

Currently, a mobile telephone, which represents a personal communication device, has various additional functions in various types. The mobile telephone already includes a high pixel camera phone, a digital multimedia broadcasting (DMB) receiving function, etc. In particular, the mobile telephone already has a file viewer or a text viewer that is included in an existing smart phone, etc. Further, the mobile phone having functions such as a moving picture player, an MP3 player, etc. is the already widely used representative mobile terminal. In recent, a portable multimedia player (PMP) includes a wireless communication device such as an HSDPA modem or a wireless LAN device in addition to a moving picture and music reproducing function, a text viewer function, a navigation function, etc. and an Internet browser that is software, such that it has a function of wirelessly accessing Internet. In recent, i-Pod touch available from Apple Co., etc., has a function of reproducing various moving pictures and musics, a slide show function, etc., which are accessed through the Internet by its own wireless LAN function, by providing a function that allows purchase of digital contents online.

Meanwhile, the various personal terminals described above have been subjected to various technical evolving processes and rapidly expanded to the public. According to this tendency, apparatuses for providing digital contents to provide or sell multimedia contents, such as various movies, dramas, music videos, e-books, etc., which are sold online, to a PMS offline have been developed.

The apparatus for providing digital contents described above is installed inside or outside a room where users are crowded and receives the corresponding digital contents from a central server using a pre-stored wired data network according to a request of a user and transmits them to a portable terminal. As a result, the apparatus for providing digital contents is an apparatus for charging a fee. The apparatus for providing digital contents provides content data to the mobile device of the user without separately paying a fee for the use of the packet. As a result, the user can be conveniently provided with the digital contents at a desired location at lower price than a case where the user is provided with the digital contents through wireless Internet services of existing mobile communication operators.

Even though there are many advantages of the apparatus for providing digital contents as described above, the user (i.e., purchaser) may not recognize a position of the apparatus for providing digital content nor receive information on various contents that are being sold in the apparatus for providing digital contents, such that he/she may fail to purchase them.

In addition, in order to sell contents through the apparatus for providing digital contents, it is inconvenient for providers, who operate the apparatus for providing contents, to periodically convert and upload contents to meet a predetermined format. In other words, there is a problem in that the providers should convert contents to meet a predetermined format so that they can be sold through the apparatus for providing contents and generate meta information (for example, screenshot) on the contents one by one and upload it together with the contents.

### SUMMARY OF THE INVENTION

The present invention proposes to solve the above problems.

An object of the present invention provides information on various contents that are sold in the apparatus for providing digital contents through a DMB channel and positional information on the apparatus for providing contents to DMB receiving terminals existing in a predetermined radius, such that users, who receives the information on various contents and the positional information on the apparatus for providing contents, can easily access the apparatus for providing contents to receive desired contents through the DMB channel.

Further, another object of the present invention receives various contents provided through a DMB channel, converts the contents into a predetermined format that can sell them, and automatically store them (converting contents into a specification required upon selling by generating meta data for the corresponding contents and storing them), thereby making it possible to solve a problem in that operators of a content vending machine convert the contents one by one to upload the contents as well as provide more various contents to users.

An apparatus for providing digital contents according to the present invention is an apparatus for providing digital contents using a DMB channel. The apparatus for providing digital contents includes: a content storage unit that stores content files; an advertisement information generator that generates advertisement information on the content files stored in the content storage unit; and a DMB transmitter and receiver that broadcasts the generated advertisement information to DMB terminals within a predetermined radius using the DMB channel.

In particular, the advertisement information includes positional information of the apparatus for providing digital contents.

In addition, the advertisement information generator includes a content file selector that selects one or more of the content files stored in the content storage unit according to the setting criteria; and a screen information extractor that extracts screen information for advertisement from the selected content files.

Further, the content file selector selects one or more of content files in which the contents are stored based on a selection frequency from a user.

Moreover, the apparatus for providing digital contents further includes a metadata extractor that extracts one or more metadata among a content name, a service type, reproducing time, resolution, a library required upon reproducing, a plot, distribution conditions, a producer, a file name of a representative screen, and a selling price from the selected content files.

Also, the screen information extractor extracts a plurality of representative screens when the content files are moving pictures and receives the user selection to set one of the plurality of representative screens to a representative screen for the moving picture files.

In addition, the apparatus for providing digital contents further includes a DMB receiver that receives DMB signals; an information extractor that extracts meta information from the received DMB signals; and a recorder that records DMB broadcasting contents according to recording rules set based on the meta information.

In addition, the apparatus for providing digital contents further includes a content converter that receives the metadata related to the recorded DMB broadcasting contents, converts the received metadata into the content files that can be sold, and stores them in the content storage unit.

Moreover, the metadata includes one or more of the content, character information, reproducing time, a file size, a price, and category information of the recorded DMB broadcasting contents.

Also, the apparatus for providing digital contents further includes a recording rule storage unit that receives and stores recording rules from a user in order to search the specific meta information.

In addition, the DMB transmitter broadcasts the advertisement information to the DMB terminals within a predetermined radius using the terrestrial DMB channel

Meanwhile, a method for providing digital contents according to the present invention is a method for providing digital contents by an apparatus for providing digital contents using a DMB channel. The method for providing digital contents includes: generating advertisement information on content files stored in a content storage unit; and broadcasting the generated advertisement information to the DMB terminal within a predetermined radius using the DMB channel.

In particular, the advertisement information includes positional information of the apparatus for providing digital contents.

Further, the generating the advertisement information on the stored content files includes selecting one or more of the stored content files according to setting criteria and extracting screen information for advertisement from the selected content files; and extracting metadata from the selected content files.

In addition, the method for providing digital contents further includes receiving DMB signals; extracting meta information from the DMB signals and recording DMB broadcasting contents according to recording rules set based on the extracted meta information; and receiving the metadata related to the recorded DMB broadcasting contents, converting the received metadata into the content files that can be sold, and storing them in the content storage unit.

The following effects can be obtained by the present invention.

The user using the apparatus for providing digital contents can obtain various information on the contents through the DMB channel and when there are the desired contents, moves to adjacent apparatuses for providing digital contents to be able to receive various contents.

In addition, the providers, who want to sell the contents through the apparatus for providing digital contents, use various contents received through the DMB channel, making it possible to promote the diversity of the contents that can be sold. As a result, the problem that the providers should convert and upload the contents one by one in order to update the contents is reduced as well as the providers provide various contents to the users, making it possible to expect an increase in the sales.

### BRIEF DESCRIPTION OF THE DRAWINGS

FIG. 1 is a diagram for explaining in detail an apparatus for providing digital contents using a DMB channel according to the present invention;
FIG. 2 is a diagram for explaining in detail a configuration of an advertisement information generator of FIG. 1;
FIG. 3 is an exemplary diagram for explaining the apparatus for providing digital contents according to the present invention for transmitting transmission stream data including advertisement information and positional information to DMB terminal within a predetermined radius;
FIG. 4 is an exemplary diagram showing one example that the DMB terminal receiving the advertisement information from the apparatus for providing digital contents according to the present invention displays the advertisement information received through a display unit;
FIG. 5 is an exemplary diagram showing one example of the latest movie introduction screen shown in FIG. 4;
FIG. 6 is an exemplary diagram showing one example of a positional information screen of the apparatus for providing content shown in FIG. 4;
FIG. 7 is a flowchart for explaining in detail a process of allowing the apparatus for providing digital contents according to the present invention to obtain DMB broadcasting contents using DMB signals received through the DMB channel; and
FIG. 8 is a flowchart for explaining in detail a method for allowing the apparatus for providing digital contents according to the present invention to perform an advertisement using the DMB channel.

### DETAILED DESCRIPTION OF THE PREFERRED EMBODIMENTS

The present invention will be described below with reference to the accompanying drawings. Herein, the detailed description of a related known function or configuration that may make the purpose of the present invention unnecessarily ambiguous in describing the present invention will be omitted Exemplary embodiments of the present invention are provided so that those skilled in the art may more completely understand the present invention. Accordingly, the shape, the size, etc., of elements in the drawings may be exaggerated for explicit comprehension.

Hereinafter, preferred embodiments of the present invention will be described in detail with reference to the accompanying drawings.

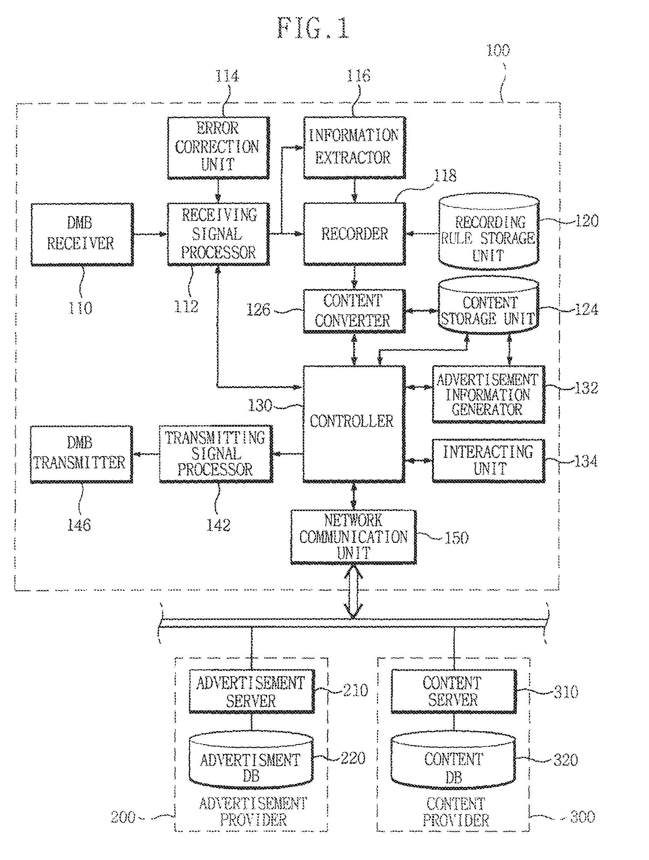

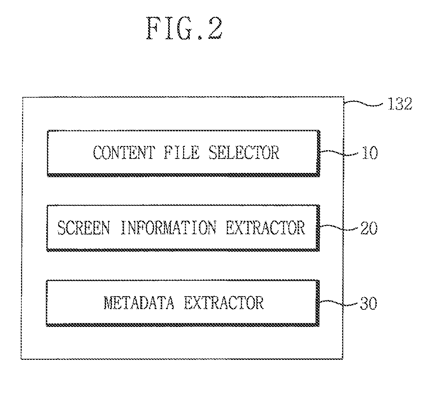

FIG. 1 is a diagram for explaining in detail an apparatus for providing digital contents (hereinafter, referred to as apparatus for providing contents) using a DMB channel according to the present invention. FIG. 2 is a diagram for explaining in detail a configuration of an advertisement information generator 132 of FIG. 1.

Referring to FIG. 1, an apparatus 100 for providing contents according to the present invention includes a DMB receiver 100, a receiving signal processor 112, an error correction unit 114, an information extractor 116, a recorder 118, a recording rule storage unit 120, a content storage unit 124, a content converter 126, a controller 130, an advertisement information generator 130, an interacting unit 134, a DMB transmitter 146, a transmitting signal processor 142, and a network communication unit 150.

The DMB receiver 110 receives digital multimedia broadcasting (DMB) signals that are being broadcasted through a DMB channel (including satellite and terrestrial DMB channel) and transmits them to the receiving signal processor 112.

The receiving signal processor 112 converts a signal in a DMB frequency band received through the DMB receiver 110 into an orthogonal signal in a baseband, selects a channel from the orthogonal signal, extracts original data corresponding to the selected channel, and then processes forward error correction (FEC) through the error correction unit 114 to output transport stream data. Since the DMB is communicated in one direction, it cannot request retransmission when error occurs. Therefore, the apparatus 100 for providing contents according to the present invention performs the forward error correction on data extracted from the DMB signal through the error correction unit 114 and then outputs the TS data. The above TS data, which are a standard that enables the DMB broadcasting system to transmit video/audio stream, multiplexes audio/video streams of several programs in a packet unit using an error correction code and transmits them.

The information extractor 116 extracts meta information (for example, MPEG-7 information) from the TS data output by the receiving signal processor 112.

The multiplexed and transmitted DMB signal includes MPEG-7 meta information for searching information in addition to the broadcasting stream such as MPEG-2, MPEG-4, etc. Since the MPEG-7 meta information includes various information, such as advertisement information, information on broadcasting players, etc. when producing broadcast, the information extractor 116 can extract the MPEG-7 information from the TS data output by the receiving signal processor 112.

The recorder 118 parses the MPEG-7 information extracted by the information extractor 116 to analyze information and records the DMB broadcasting contents including specific meta information among the analyzed information. In detail, the recorder 118 records the corresponding DMB broadcasting contents according to recording rules stored in the recording rule storage unit 120 based on the MPEG-7 information extracted by the information extractor 116. Herein, the recording rule storage unit 120 receives and stores the recording rules for searching the specific meta information fro the user (operator of the apparatus for providing contents).

For example, when the recording rule is set to record a broadcast of the entire baseball game among the DMB broadcasting contents, the recorder 118 records a program of all the baseball games that are broadcasted through the DMB channel based on the foregoing meta information. In addition, when the recording rule is set to record all the broadcasts in which a specific person appears, the recorder 118 records all the broadcasting contents in which the specific person appears among the broadcasting contents that are broadcasted through the DMB channel based on the foregoing meta information.

In other words, the recorder 118 can selectively record the DMB broadcasting contents according to the recording rule. Therefore, the user can view the desired broadcasting images after broadcasting by automatically extracting and recording the specific broadcasting contents, such that the convenience of the user can be improved.

The content converter 126 receives the metadata related to the DMB broadcasting contents recorded through the recorder 118, converts them into the content files that can be sold, and stores them in the content storage unit 124. In general, in the case of the DMB broadcasting contents received through the DMB channel, since they are not transmitted in a format for selling, the corresponding broadcasting contents should be converted into a format that can be sold. In other words, when the DMB broadcasting contents received through the DMB channel are immediately recorded, the purchaser does not have additional information that can be referenced when purchasing the corresponding broadcasting contents, the additional information should be generated in a graphical user interface (GUI) form.

To this end, the content converter 126 requests the DMB broadcasting contents recorded through the recorder 118 and the related metadata to a content provider 300, converts the contents using the metadata for the broadcasting contents received from the content provider 300, and stores the converted contents in the content storage unit 124. Herein, the content provider 300, which is a provider who provides the contents and the metadata to the apparatus 100 for providing contents according to the present invention, includes a content server 310 that transmits the digital contents and metadata to the apparatus 100 for providing contents and a content DB 320 that stores various digital contents and metadata. The content server 310 transmits various multimedia contents to the apparatus for providing contents online and the apparatus 100 for providing contents receives the multimedia contents from content server 310 to update the contents.

Meanwhile, the metadata received by the content converter 126 from the content provider 300 may include content, character information, reproducing time, a file size, a price, category information, etc. of the recorded DMB broadcasting contents.

In addition, the content converter 126 can obtain additional information for selling contents using MPEG-7 information extracted by the information extractor 116.

In addition, the content converter 126 includes an image converter (not shown), a document converter (not shown), a moving picture converter (not shown), and a compiler/linker (not shown) for converting an application program operated in the user terminal.

The image converter receives information, such as an image compression format supported by the user terminal, a spare storage space size of the user terminal, the screen information of the user terminal, etc. and uses them, such that it converts the images stored in the content storage unit 124 into a form optimized for the user terminal.

The document converter receives a type of documents supported by the user terminal, the spare storage space size of the user terminal, the screen information of the user terminal, etc. and uses them, such that it converts the documents stored in the content storage unit 124 into a form optimized for the user terminal.

The moving picture converter receives a moving picture compression format supported by the user terminal, a spare storage space size of the user terminal, a main memory size of the user terminal, CPU information etc. and uses them, such that it converts the moving pictures stored in the content storage unit 124 into a format optimized for the user terminal.

The compiler/linker receives platform and library version information mounted in the user terminal, a type of mounted libraries, a mail memory size of the user terminal, the CPU information, the screen information of the user terminal, etc. and uses them, such that it performs an operation of building the contents stored in the content storage unit 124 again.

The content storage unit 124 receives and stores content files converted by the content converter 126. For example, the content storage unit 124 may store moving pictures, images, MP3 files, documents, etc. The contents stored in the content storage unit 124 may be an original content file and content file converted into various forms to meet to the various user terminals.

The network communication unit 150 performs communication by connecting the apparatus for providing contents according to the present invention to the advertisement server 210 of the advertisement provider 200 and the content server 310 of the content provider 300.

An accounting server (not shown) is a unit that charges a fee for contents purchased by the user and charges a fee through the existing used various methods, such as cash, card, E-money, mobile phone payment, etc.

The advertisement information generator 132 generates the advertisement information for the content files stored in the content storage unit 124.

The advertisement information generated through the advertisement information generator 132 is transmitted to a transmitting signal processor 142 through the controller 130 and the transmitting signal processor 142 converts the advertisement information received from the controller 130 into the transmission stream data corresponding to a DMB standard so that the advertisement information can be broadcasted through the DMB channel.

To this end, the advertisement information generator 132 includes a content file selector 10, a screen information extractor 20, and a metadata extractor 30.

The content file selector 10 selects one or more of content files stored in the content storage unit 124 according to the setting criteria. At this time, the content file selector 10 selects popular contents (contents having high selection frequency by the user) among the content files stored in the content storage unit 124 or selects the recently updated content files, making it possible to maximize the advertisement effect by the generated advertisement information. In other words, the advertisement information enables a receiver who receives the advertisement information to arouse his interest.

The content file selector 10 receives information on the statistics of the use of the entire contents through the controller 130 and uses it, making it possible to selectively select content files.

The screen information extractor 20 extracts screen information for advertisement (for example, screenshot) from the content files selected by the content file selector 10. The screen information extractor 20 determines the kind of content files selected through the content file selector 10 to determine whether the screen for advertisement can be extracted and if it is determined that the screen for advertisement is extracted, extracts the screen information for advertisement from the corresponding content files. At this time, the content files that can extract the screen for advertisement from the content files may be MPEG 4, AVI, JPEG, etc. For example, the screen information extractor 20 extracts the screen for advertisement at a predetermined time interval when the content files are moving pictures. The screen information extractor 20 requests the user selection to the user through the interacting unit 134 when the plurality of screens for advertisement for content files are extracted and receives the user selection accordingly to set one screen for advertisement as the screen for advertisement for the corresponding content file. The foregoing screen for advertisement is an image displayed to the user in order to obtain approximate information on the contents and can be stored in a general bitmap image format (for example, BMP, PNG, JPEG, etc.).

The metadata extractor 30 extracts metadata for each content file selected through the content file selector 10. The metadata extracted through the metadata extractor 30 may include a content name, a service type, reproducing time, resolution, a library required upon reproducing, a plot, distribution conditions, a producer, a file name of a representative screen, and a selling price.

Meanwhile, the metadata extractor 30 can receive metadata for the corresponding content files from the content server 310 when the metadata cannot be extracted from the specific content files stored in the content storage unit 124.

As another method, the advertisement information generator 132 may request the input of the metadata necessary to generate the advertisement information to the user through the interacting unit 134 and may receive the information from the user accordingly.

The advertisement information generated by the advertisement information generator 132 includes information on the contents that are being sold by the apparatus 100 for providing contents according to the present invention as well as the positional information on a place where the apparatus 100 for providing content is installed. In other words, the apparatus 100 for providing contents according to the present invention transmits various information on the contents that are being sold and the positional information on the place where the apparatus 100 for providing contents is installed on the DMB terminals within a predetermined radius through the DMB channel. Therefore, the user can continuously receive information on the contents obtainable from the adjacent apparatuses for providing contents through his/her own DMB terminal and when there are contents that the user wants to purchase, easily accesses the adjacent apparatuses for providing contents, making it possible to receive the desired contents.

In addition, when there are contents that the user wants to purchase, since he/she immediately accesses the apparatus for providing contents to purchase the desired contents, the user does not consume a lot of time to search whether his/her desired contents exist in the apparatus for providing contents.

In general, in the case of a moving user, the user does not recognize the installation position of the apparatus for providing contents that exists near him/her and is difficult to recognize popular contents that are being sold in the apparatus for providing contents. However, the present invention can solve the above problems.

The controller 130 controls each unit to implement the present invention, In more detail, the controller 130 requests the metadata to the content server 310 through the network communication unit 150 according to a request of the metadata from the content converter 126. The metadata transmitted from the content server 310 are received through the network communication unit 150 and are transmitted to the content converter 126.

The controller 130 accesses the apparatus 100 for providing contents according to the present invention and stores the information of the user terminal that downloads the contents, customer management information such as contents purchasing history, interest contents, etc., and manages statistics on the use of the entire contents (for example, selection frequency of contents the most frequently selected by the user, etc.).

The transmitting signal processor 142 receives the advertisement information generated in the advertisement information generator 132 from the controller 130, converts the received advertisement information into the transmission stream data standard (for example, MPEG-2 TS) that is specified to be able to be transmitted through the terrestrial DMB channel, and transmits it to the DMB transmitter 146.

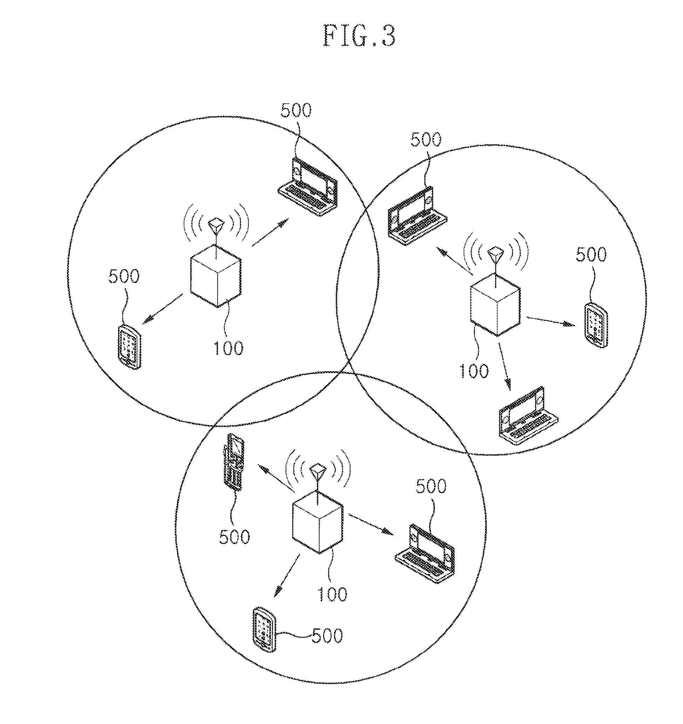

The DMB transmitter 146 receives the transmission stream including the advertisement information from the transmitting signal processor 142 and broadcasts it to the DMB receiving terminals within a predetermined radius (see FIG. 3). In the present invention, the DMB transmitter 146 uses the small-sized base station apparatus to reach the transmitting signal to only the DMB terminals within a predetermined radius and can receive the transmission signal from the apparatus for providing contents at other adjacent areas, such that it is preferably installed to form all of the multi cells.

It is preferable that the DMB transmitter 146 uses the terrestrial DMB channel to broadcast the advertisement information to the DMB terminals. Since the user can use the terrestrial DMB free of charge, the advertisement information effect can be further maximized.

Meanwhile, the apparatus 100 for providing contents according to the present invention receives the advertisement information (for example, advertisement of goods, etc.) from the advertisement provider 200 that includes the advertisement server 210 and the advertisement DB 220, making it possible to transmit the advertisement information included in the transmission stream transmitted through the DMB transmitter 146.

With the above configuration, the operator who operates the apparatus for providing contents according to the present invention can increase the selling frequency of contents through advertisement using the DMB channel and advertises a separate advertisement image such as advertisement of goods by being inserted in the transmission stream data transmitted through the DMB channel, making it possible to create a separate revenue source.

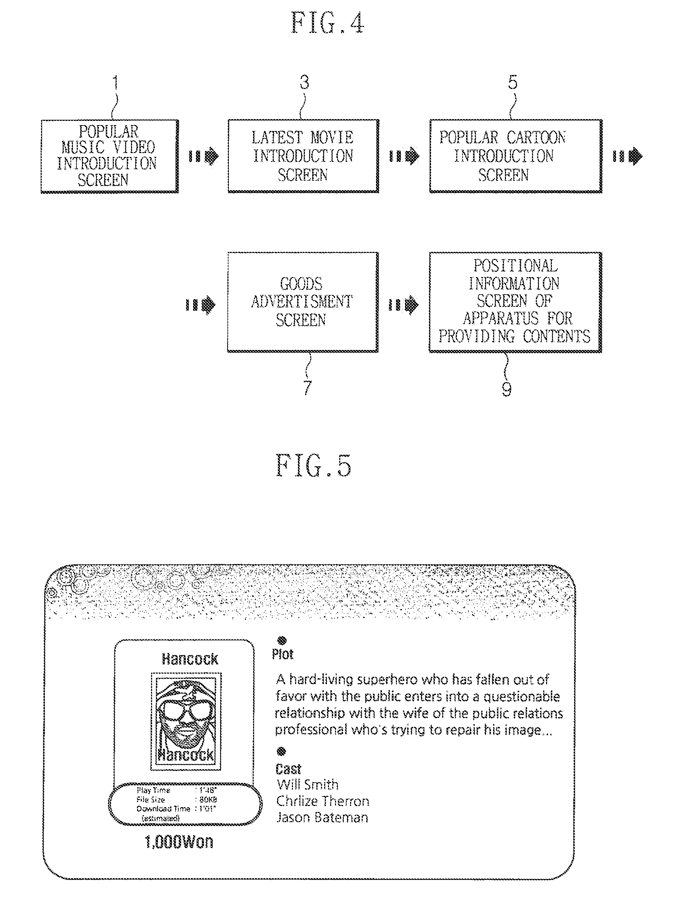

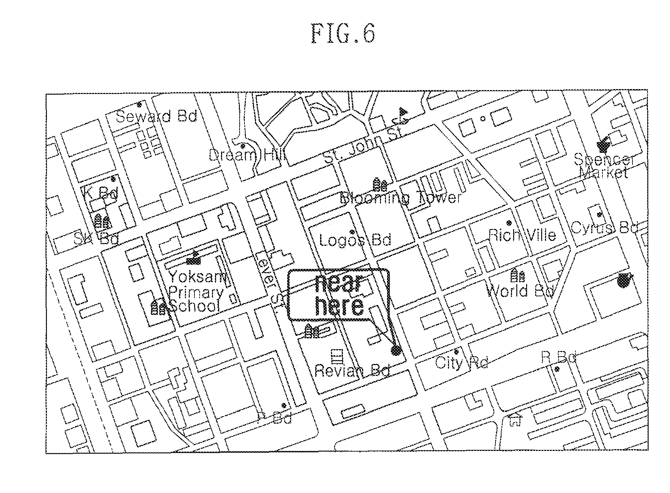

FIG. 4 is a diagram showing one example that the DMB terminal receiving the advertisement information generated through the advertisement information generator 132 displays the advertisement information through the display unit. FIG. 5 is an exemplary diagram showing one example of the latest movie introduction screen 3 shown in FIG. 4. FIG. 6 is an exemplary diagram showing one example of a positional information screen 9 of the apparatus for providing content shown in FIG. 4.

As shown in FIG. 4, the information on the contents that is being provided (sold) and the positional information of the apparatus 100 for providing contents are included in the apparatus 100 for providing contents according to the present invention. For example, the DMB terminal receiving the advertisement information displays the popular music vide instruction screen 1, the latest movie introduction screen 3, the popular cartoon introduction screen 5, the advertisement of goods screen 7, the positional information screen 9 of the apparatus for providing contents, etc. to the user through the display unit.

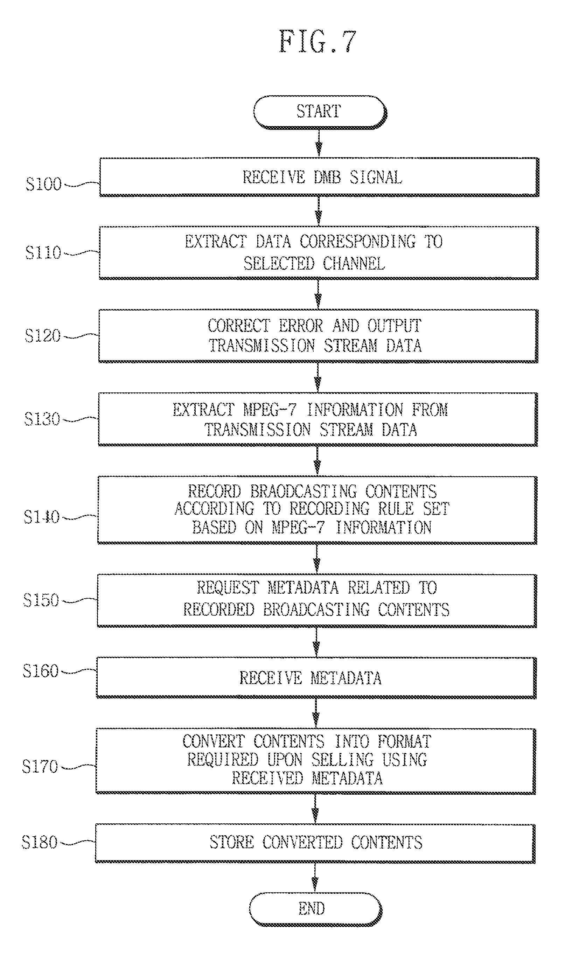

FIG. 7 is a flowchart for explaining in detail a process of allowing the apparatus for providing digital contents (hereinafter, referred to as an apparatus for providing contents) according to the present invention to obtain DMB broadcasting contents using DMB signals received through the DMB channel.

Referring to FIG. 7, the apparatus 100 for providing contents according to the present invention receives a digital multimedia broadcasting signal that is being broadcasted through the DMB channel (including satellite and terrestrial DMB channels) (S100).

Next, the apparatus 100 for providing contents converts the DMB signal received at step S100 into an orthogonal signal in a base band, selects a channel from the orthogonal signal, extracts original data corresponding to the selected channel (S110), and outputs the TS data by forward error correction (FEC). Since the DMB is communicated in one direction, it cannot request retransmission when an error occurs. Therefore, the apparatus 100 for providing contents according to the present invention performs correction on data extracted from the DMB by the forward error correction and then outputs the TS data (S120).

If the TS data are output, the meta information (for example, MPEG-7 information) is extracted (S130). The multiplexed and transmitted DMB signal includes MPEG-7 meta information for searching information in addition to the broadcasting stream such as MPEG-2, MPEG-4, etc. The MPEG-7 meta information includes various information, such as advertisement information, information on broadcasting players, etc. when producing broadcast, making it possible to extract the MPEG-7 information from the TS data output at step S120.

Next, the apparatus 100 for providing contents parses the MPEG-7 information extracted at step S130 to analyze information and records the DMB broadcasting contents including specific meta information among the analyzed information (S140). In more detail, the corresponding DMB broadcasting contents are recorded according to the recording rule set based on the extracted MPEG-7 information. Herein, the recording rule is to search the specific meta information and is set by being received from the user (operator of the apparatus for providing contents).

For example, when the recording rule is set to record a broadcast of the entire baseball game among the DMB broadcasting contents, the apparatus 100 for providing contents records a program of all the baseball games that are broadcasted through the DMB channel based on the foregoing meta information. In addition, when the recording rule is set to record all the broadcasts in which a specific person appears, the apparatus 100 for providing contents records all the broadcasting contents in which the specific person appears among the broadcasting contents that are broadcasted through the DMB channel based on the foregoing meta information. In other words, the apparatus 100 for providing contents according to the present invention can selectively record the DMB broadcasting contents according to the recording rule. Thereby, the user can selectively view the desired broadcasting image after broadcasting by automatically extracting and recording the specific broadcasting contents.

Next, the apparatus 100 for providing contents requests the metadata related to the recorded DMB broadcasting contents to the content provider in order to convert the DMB broadcasting contents recorded through step S140 into a format that can sell them (S150) and receives the metadata transmitted from the content provider (S160). The contents provider is the subject that provides the metadata related to the recorded SMB broadcasting contents and is configured independent of the apparatus 100 for providing contents according to the present invention.

In general, in the case of the DMB broadcasting contents received through the DMB channel, since they are not transmitted in a format for selling, the corresponding broadcasting contents should be converted into a format that can sell them. In other words, when the DMB broadcasting contents received through the DMB channel are immediately recorded and stored, the purchaser does not have additional information that can be referenced when purchasing the corresponding broadcasting contents, such that it is not suitable for selling the contents. Therefore, the additional information that can be referenced upon selling should be generated in a GUI format.

To this end, the apparatus 100 for providing contents requests the metadata related to the DMB broadcasting contents recorded at step S140 to the content provider and converts them into a format that can sell them by using the metadata for the broadcasting contents receive from the content provider (S170). Herein, the additional information for selling contents can be obtained using the extracted MPEG-7 information through step S130. Meanwhile, the metadata obtained by the apparatus 100 for providing contents from the content provider or the MPEG -7 information may include content, character information, reproducing time, a file size, a price, category information, etc. of the recorded DMB broadcasting contents.

Finally, the apparatus 100 for providing contents stores contents converted through step S170 (S180).

According to the above description, since the DMB broadcasting contents transmitted through the DMB channel can directly be stored and sold, even when the demand and supply of contents is poor, the popular contents can be resold and the demand and supply of contents can be smoothed. In addition, the excellent terrestrial DMB broadcasting contents are extracted from the apparatuses for providing contents that are installed in each region and are provided to the central server, such that the foregoing DMB broadcasting contents can be sold throughout the whole country. In other words, the present invention can secure the distribution path that can resell the excellent contents made by small-scale organizations of a region unit in the whole country.

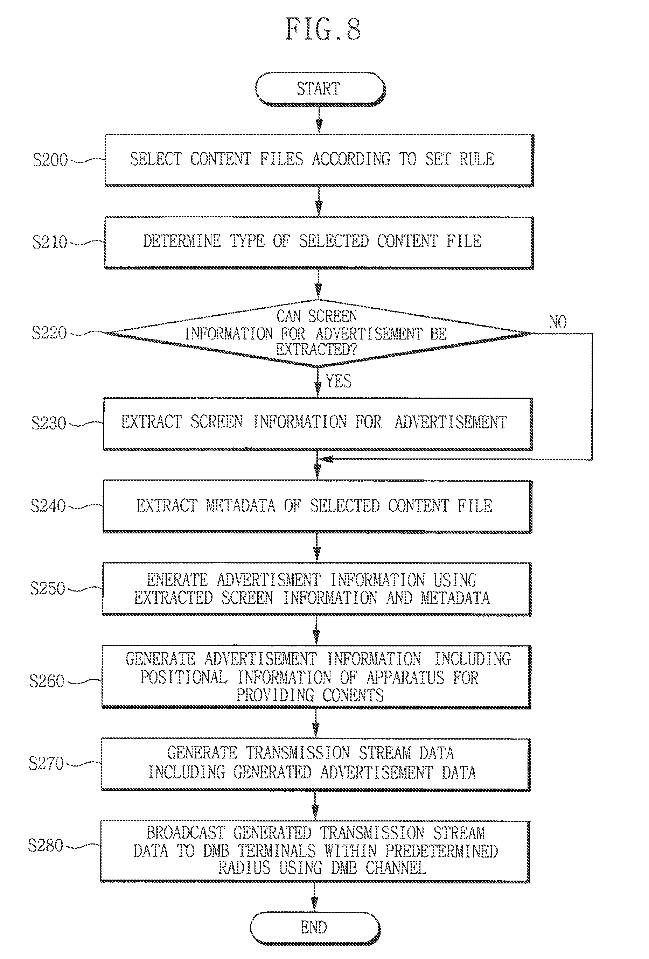

FIG. 8 is a flowchart for explaining in detail a method for allowing the apparatus for providing digital contents according to the present invention to perform an advertisement using the DMB channel.

Referring to FIG. 8, the apparatus 100 for providing contents according to the present invention generates the advertisement information for stored content files and transmits the DMB terminals within a predetermined radius through the DMB channel.

In more detail, the apparatus 100 for providing contents selects one or more of content files stored in the content storage unit according to the setting criteria (S200). At this time, when the content files are selected, the popular contents among the content files stored in the content storage unit are selected or the recently updated content files are selected, making it possible to maximize the advertisement effect by the generated advertisement information. At this time, the user selection is directly input, making it possible to select the specific content files.

Next, when the contents, which will generate the advertisement information through step S200, are selected, the kind of selected content files attempts to determine whether the screen for advertisement can be extracted (S220).

As the determination result at step S220, when the screen for advertisement can be extracted, the screen information for advertisement (for example, screenshot) is extracted from the corresponding content files (S230). At this time, the content files that can extract the screen for advertisement from the content files may be MPEG4, AVI, JPEG, etc. and when the content files are moving pictures, the plurality of screens for advertisement can be extracted at a predetermined time interval. When the plurality of screens for advertisement of the content files are extracted, it requests the user selection to the user and receives the user selection accordingly, such that the screen for advertisement is set as the screen for advertisement for the corresponding content files. The foregoing screen for advertisement is an image displayed to the user in order to obtain approximate information on the contents that the user wants to purchase when he/she purchases contents and can be stored in a general bitmap image format (for example, BMP, PNG, JPEG, etc.).

Next, the apparatus 100 for providing contents extracts the metadata for each content file selected through step S200 (S240). The metadata extracted at step S240 may include a content name, a service type, reproducing time, resolution, a library required upon reproducing, a plot, distribution conditions, a producer, a file name of a representative screen, and a selling price, etc.

Meanwhile, when the metadata cannot be extracted from the specific content files stored in the content storage unit as step S240, it requests the metadata for the content files to the content provider and receives them. As another method, it requests the input of the metadata necessary to generate the advertisement information to the user and can input the information from the user accordingly.

Next, the apparatus 100 for providing contents uses the screen information for advertisement extracted as step S230 and the metadata extracted at step S240 to generate the advertisement information (S250).

Meanwhile, the generated advertisement information includes information on the contents that are being sold in the apparatus 100 for providing contents according to the present invention as well as the positional information on a place where the apparatus 100 for providing content is installed (S260).

It generates the transmission stream corresponding to the DMB standard (for example, MPEG-2 TS) so that the advertisement information can be transmitted through the DMB channel at steps S250 and S260 (S270). It broadcasts the generated transmission stream to the DMB terminals within a predetermined radius using the DMB channel. In other words, the apparatus 100 for providing contents according to the present invention transmits various information on the contents that are being sold and the positional information on the place where the apparatus 100 for providing contents is installed to the DMB terminals within a predetermined radius.

According to the above description, the user (purchaser) can continuously receive information on the contents obtainable from the adjacent apparatuses for providing contents through his/her own DMB terminal and when there are contents that the user wants to purchase, easily accesses the adjacent apparatuses for providing contents, making it possible to receive the desired contents. In addition, when there are contents that the user wants to purchase, since he/she immediately accesses the apparatus for providing contents to purchase the desired contents, the user does not consume a lot of time to search whether his/her desired contents exist in the apparatus for providing contents. In general, in the case of a moving user, the user does not recognize the installation position of the apparatus for providing contents that exists near him/her and is difficult to recognize popular contents that are being sold in the apparatus for providing contents. However, the present invention can solve the above problems.

In the operator of the apparatus for providing contents, the contents selling frequency can be increased through advertisement using the DMB channel, making it possible to maximize the margin due to the contents selling. Also, the apparatus 100 for providing contents according to the present invention can transmit the advertisement information (for example, advertisement of goods, etc.) received from the advertisement provider 200 included in the transmission stream transmitted through the DMB channel. Thereby, the operator of the apparatus for providing contents can make an advertisement by inserting a separate advertisement image such as advertisement of goods in the transmission stream data transmitted through the DMB channel, making it possible to create a separate revenue source.

Some steps of the present invention can be implemented as a computer-readable code in a computer-readable recording medium. The computer-readable recording media include all types of recording apparatuses in which data that can be read by a computer system is stored. Examples of the computer-readable recording media include a ROM, a RAM, a CD-ROM, a CD-RW, a magnetic tape, a floppy disk, an HDD, an optical disk, an optical magnetic storage device, etc. and in addition, include a recording medium implemented in the form of a carrier wave (for example, transmission through the Internet). Further, the computer-readable recording media are distributed on computer systems connected through the network, and thus the computer-readable recording media may be stored and executed as the computer-readable code by a distribution scheme.

As described above, the preferred embodiments have been described and illustrated in the drawings and the description. Herein, specific terms have been used, but are just used for the purpose of describing the present invention and are not used for qualifying the meaning or limiting the scope of the present invention, which is disclosed in the appended claims. Therefore, it will be appreciated to those skilled in the art that various modifications are made and other equivalent embodiments are available. Accordingly, the actual technical protection scope of the present invention must be determined by the spirit of the appended claims.

## Claims

1. An apparatus for providing digital contents using a DMB channel, comprising:
a content storage unit that stores content files;
an advertisement information generator that generates advertisement information on the content files stored in the content storage unit; and
a DMB transmitter and receiver that broadcasts the generated advertisement information to DMB terminals within a predetermined radius using the DMB channel.

2. The apparatus for providing digital contents according to claim 1, wherein the advertisement information includes positional information of the apparatus for providing digital contents.

3. The apparatus for providing digital contents according to claim 1 or 2, wherein the advertisement information generator includes:
a content file selector that selects one or more of the content files stored in the content storage unit according to setting criteria; and
a screen information extractor that extracts screen information for advertisement from the selected content files.

4. The apparatus for providing digital contents according to one of claims 1 to 3, wherein a content file selector selects one or more of content files in which the contents are stored based on a selection frequency from a user.

5. The apparatus for providing digital contents according to one of claims 1 to 4, further comprising a metadata extractor that extracts one or more metadata among a content name, a service type, reproducing time, resolution, a library required upon reproducing, a plot, distribution conditions, a producer, a file name of a representative screen, and a selling price from the selected content files.

6. The apparatus for providing digital contents according to one of claims 1 to 5, wherein a screen information extractor extracts a plurality of representative screens when the content files are moving pictures and receives the user selection to set one of the plurality of representative screens to a representative screen for the moving picture files.

7. The apparatus for providing digital contents according to one of claims 1 to 6, further comprising:
a DMB receiver that receives DMB signals;
an information extractor that extracts meta information from the received DMB signals; and
a recorder that records DMB broadcasting contents according to recording rules set based on the meta information.

8. The apparatus for providing digital contents according to one of claims 1 to 7, further comprising a content converter that receives the metadata related to the recorded DMB broadcasting contents, converts the received metadata into the content files that can be sold, and stores them in the content storage unit.

9. The apparatus for providing digital contents according to claim 8, wherein the metadata includes one or more of the content, character information, reproducing time, a file size, a price, and category information of the recorded DMB broadcasting contents.

10. The apparatus for providing digital contents according to one of claims 1 to 9, further comprising a recording rule storage unit that receives and stores recording rules from a user in order to search the specific meta information.

11. The apparatus for providing digital contents according to one of claims 1 to 10, wherein the DMB transmitter broadcasts the advertisement information to the DMB terminals within a predetermined radius using the terrestrial DMB channel.

12. A method for providing digital contents by an apparatus for providing digital contents using a DMB channel, comprising:
generating advertisement information on content files stored in a content storage unit; and
broadcasting the generated advertisement information to DMB terminal within a predetermined radius using the DMB channel.

13. The method for providing digital contents according to claim 12, wherein the advertisement information includes positional information of the apparatus for providing digital contents.

14. The method for providing digital contents according to claim 12 or 13, wherein the generating the advertisement information on the stored content files includes:
selecting one or more of the stored content files according to setting criteria and extracting screen information for advertisement from the selected content files; and
extracting metadata from the selected content files.

15. The method for providing digital contents according to one of claims 12 to 14, further comprising:
receiving DMB signals;
extracting meta information from the DMB signals and recording DMB broadcasting contents according to recording rules set based on the extracted meta information; and
receiving the metadata related to the recorded DMB broadcasting contents, converting the received metadata into the content files that can be sold, and storing them in the content storage unit.
